# EUROPÄISCHE PATENTSCHRIFT

(11) **EP 2 266 693 B1**
(45) Veröffentlichungstag und Bekanntmachung des Hinweises auf die Patenterteilung: **06.12.2017**
(21) Anmeldenummer: 10166396.1
(22) Anmeldetag: 17.06.2010
(51) Int. Cl.: B01L 3/00, B01L 7/00, G01N 21/41

(54) **Refraktometer**
Refractometer
Réfractomètre

(30) Priorität: 26.06.2009 EP 09163868
(43) Veröffentlichungstag der Anmeldung: 29.12.2010
(73) Patentinhaber: Mettler-Toledo GmbH, 8606 Greifensee (CH)
(72) Erfinder: Forrer, Christian, 8452 Elsau (CH); Bossart, Erwin, 9230 Flawil (CH); Bécheiraz, Félix, 8460 Marthalen (CH)
(74) Vertreter: Mettler-Toledo

(56) Entgegenhaltungen:
- EP-A2- 1 256 378
- DE-A1- 19 922 285
- DE-A1-102005 038 252
- US-A- 2 601 128
- Mettler-Toledo Gmbh: "Operating Instructions RE40 Refractometer - version 4", , 1 January 2001 (2001-01-01), pages 1-80, XP055381361, Mettler-Toledo GmbH, Analytical, Sonnenbergstrasse 74, CH-8603 Schwerzenbach, Switzerland Retrieved from the Internet: URL:http://www.mt.com/dam/mt_ext_files/Edi torial/Generic/0/RE_40_operating_instructi ons_English_0x00001008408fb4bb4001c404_fil es/51709842_re40v4_e2001.pdf [retrieved on 2017-06-14]

## Beschreibung

Die Erfindung betrifft ein Refraktometer und insbesondere eine Deckeleinheit für das Refraktometer, welche lösbar mit diesem verbunden ist und einen austauschbaren Deckeleinsatz aufweist.

Refraktometer dienen zur Bestimmung der Brechzahl bzw. des Refraktionsindex, wobei die Refraktometrie zu den Standardmethoden der chemischen Analyse zählt. Die Brechzahl ist eine stoffspezifische Grösse, was bedingt, dass die mit einer Probensubstanz in Kontakt kommenden Teile des Refraktometers aufgrund der einzuhaltenden Standards einfach und leicht zu reinigen sein sollte. Dokument US 2 601 128 A betrifft ein Refraktometer und offenbart den Gegenstand des Oberbegriff des Anspruch 1. Kommerziell erhältliche Geräte, wie beispielsweise das Refraktometer RE 40 von Mettler-Toledo (siehe zum Beispiel das Dokument XP055381361: "Operating Instructions RE40 Refractometer - Version 4.0" von Mettler-Toledo GmbH, Analytical, Sonnenbergstrasse 74, CH-8603 Schwerzenbach, Switzerland), umfassen meist ein Gehäuse in welchem unter anderem die Messoptik und eine Messzelle, die für eine Messung mit der Probe beschickt wird, angeordnet sind. Die Messoptik ist derart im Gerät angeordnet, dass von einer Strahlungsquelle ausgesendetes Licht in die Messzelle ein- und ausgekoppelt werden kann. Das nach Wechselwirkung mit der Probensubstanz aus der Messzelle ausgekoppelte Licht wird dann durch einen geeigneten Detektor detektiert. Licht steht hier synonym für Strahlung. Standardmässig wird die Brechzahl n bei der D-Linie von Natrium, also bei einer Wellenlänge von 589,3 nm, gemessen, es können jedoch auch andere Temperaturen oder Wellenlängen verwendet werden. Die Brechzahl ist eine temperaturabhängige Grösse und wird meist bei 25°C gemessen oder auf diese Temperatur bezogen. Aus diesem Grund weisen viele Refraktometer eine Heizung zum Erwärmen der Probe auf.

Die Messzelle wird nach aussen durch einen Deckel abgeschlossen, welcher meist fest mit dem Gerät verbundenen ist und ohne grösseren Aufwand nur oberflächlich gereinigt werden kann. Gerade wenn dasselbe Refraktometer für unterschiedliche Probesubstanzen verwendet wird, wäre es vorteilhaft, wenn dieses einfach gründlich gereinigt werden könnte, um eine Kontamination durch alte Probenreste zu verhindern.

Somit ergibt sich die Aufgabe der Bereitstellung eines Refraktometers mit einer verbesserten Deckeleinheit, welche eine rasche und einfache Reinigung ermöglicht.

Gelöst wird diese Aufgabe durch ein Refraktometer mit einem Gehäuse, mit einer im Gehäuse angeordneten Messzelle und mit einer Deckeleinheit, welche Deckeleinheit eine Grundplatte mit einer Aussparung, die einen Zugang zur Messzelle des Refraktometers bildet, einen Deckel, welcher über ein Scharnier mit der Grundplatte verbunden ist, und einen Deckeleinsatz zum Abdecken der Messzelle aufweist, welcher Deckeleinsatz auswechselbar im Deckel angeordnet ist. Die Deckeleinheit ist zudem über ein mit der Grundplatte verbundenes Verbindungselement lösbar mit dem Gehäuse verbunden.

Das Verbindungselement ermöglicht es die Deckeleinheit einfach vom Refraktometer zu entfernen und diese getrennt zu reinigen. Die Deckeleinheit kann somit sehr einfach, vorzugweise werkzeugfrei, vom Gehäuse entfernt werden, wodurch beispielsweise verhindert wird, dass bei der Reinigung der Deckeleinheit eine aggressivere Reinigungslösung das direkte Umfeld um die Messzelle angreift. Durch den modularen Aufbau der Deckeleinheit kann diese einfach gereinigt werden und zudem kann eine Beschädigung der Messzelle und/oder des Gehäuses durch den Reinigungsvorgang verhindert werden.

Zudem ermöglicht der austauschbare Deckeleinsatz eine Konditionierung der Probe, wenn sich diese in der Messzelle befindet. Auf diese Weise können mit einem einzigen Refraktometer allein durch Austausch des Deckeleinsatzes Proben unter unterschiedlichen Bedingungen und auch sehr unterschiedliche Proben vermessen werden.

In einer weiteren Ausgestaltung können der Deckeleinsatz und/oder die Deckeleinheit für die einmalige Nutzung, also als Verbrauchsmaterial, ausgestaltet sein, was insbesondere bei Messungen unter sterilen Bedingungen von Vorteil ist.

Die Grundplatte der Deckeleinheit weist eine Aussparung für einen Messzellen-Zugang auf, so dass die im Messgerät befindliche Messzelle auch bei befestigter Deckeleinheit beschickt werden kann. Die Aussparung kann mit dem Deckel, insbesondere mit dem Deckeleinsatz verschlossen werden.

In einer weiteren Ausgestaltung weist die Deckeleinheit zudem mindestens ein Dichtungselement auf, welches die Grundplatte gegen die Messzelle abdichtet. Dieses kann um den Rand der Aussparung herum angeordnet und beispielsweise ein O-Ring sein. Das Dichtungselement kann verhindern, dass Substanz zwischen das Messgerät und die Grundplatte der Deckeleinheit eindringt, indem es einen möglichen Spalt abdichtet.

Weiterhin kann die Grundplatte einen die Aussparung umlaufenden Rand aufweisen, dessen Dimension und Ausrichtung an die Ausgestaltung der Messzelle angepasst sein sollten. Dieser Rand kann beispielsweise in die Messzelle hineinragen oder von der Messzelle weg gerichtet sein, so dass möglicherweise nach dem Befüllen auf der Grundplatte verbleibende Substanzreste nicht in die Messzelle gelangen können.

Das Scharnier kann ebenfalls zwei gekoppelte Teile aufweisen, so dass der Deckel und die Grundplatte voneinander getrennt werden können. So können zum Beispiel Substanzreste, welche sich im Deckel oder im Scharnier festgesetzt haben, einfach und gründlich entfernt werden. Zudem können mindestens einige Elemente der Deckeleinheit, wie z. B. die Grundplatte, nicht nur manuell sondern auch maschinell, zum Beispiel in einer Spülmaschine, gereinigt werden. Das Scharnier kann beispielsweise zwei mit einem manuell entfernbaren Stift verbundenen Teile oder zwei über eine Rast- oder Klickverbindung gekoppelte Teile aufweisen.

In einer weiteren Ausgestaltung ist der Deckel so ausgestaltet, dass er im geschlossenen Zustand sowie auch im offenen Zustand in der entsprechenden Stellung gehalten wird, indem beispielsweise der Deckel in der Nähe des Griffs ein Schliesselement, zum Beispiel einen Magneten, und im Scharnier ein Rückstellelement, zum Beispiel eine Feder, aufweist. Die Kraft des Schliesselements ist auf die des Rückstellelements abgestimmt, so dass der Deckel nur durch einen zusätzlichen Kraftimpuls von der einen in die andere Stellung überführt werden kann.

Vorzugsweise ist der Deckeleinsatz lösbar mit dem Deckel verbunden, zum Beispiel über eine Schnappverbindung, so dass der Deckeleinsatz werkzeugfrei ausgetauscht werden kann. Der austauschbare Deckeleinsatz kann vielfältige ausgestaltet sein.

Der Deckeleinsatz kann als Presseinsatz als Mittel zum Verteilen der Probe in der Messzelle ausgestaltet sein. Der Presseinsatz kann einen Stempel aufweisen, mit dem Druck auf eine Probe in der Messzelle ausgeübt wird, so dass der Kontakt zwischen einer im Gehäuse angeordneten Messeinheit und der Probe verbessert wird, beispielsweise indem die Probe flächig auf der aktiven Messfläche verteilt wird. Dieses ist insbesondere bei hochviskosen Substanzen vorteilhaft, vor allem, wenn die Messeinheit eine optische Messeinheit ist, welche über ein Fenster im Boden oder der Wand der Messzelle mit einer in der Messzelle befindlichen Probe wechselwirkt. Der Presseinsatz ist so im Deckel angeordnet, dass dieser beim Schliessen des Deckels Druck auf die Probe ausübt und diese dadurch in der Messzelle verteilt wird. Dabei kann der Presseinsatz die Probe teilweise verdrängen.

Der Deckeleinsatz kann auch als optische Abschirmung ausgestaltet sein, welche die Messzelle gegen Fremdlicht abschirmt. Als optische Abschirmung eignet sich beispielsweise eine Platte oder Scheibe mit einer dunklen Oberfläche, welche bei geschlossenem Deckel die Aussparung lichtdicht abdeckt. Diese Ausgestaltung ist bei Verwendung einer optischen Messeinheit vorteilhaft, da so Fehler im Messergebnis durch einfallendes Umgebungs- oder Fremdlicht vermieden werden können.

Ferner kann der Deckeleinsatz als Dichteinsatz ausgestaltet sein und die Messzelle gegenüber der Umgebung abdichten. Ein derartiger Dichteinsatz kann so ausgestaltet sein, dass er bei geschlossenem Deckel die Messzelle abdichtet und dazu dient, das Verdampfen leicht flüchtiger Substanzen zu verhindern.

Weiterhin kann der Deckeleinsatz als Temperiermittel zum Temperieren der Probe ausgestaltet sein, so dass diese gekühlt oder erwärmt werden kann. Das Temperiermittel kann im Deckeleinsatz angeordnet oder mit diesem verbunden sein, wobei der Deckeleinsatz aus einem thermisch leitenden Material bestehen sollte. Ein Beispiel für ein im Deckeleinsatz ausgebildetes Temperiermittel stellen ein oder mehrere Peltierelemente, welche sowohl zum Heizen als auch zum Kühlen verwendet werden können, oder eine Widerstandsheizung dar. Der Deckeleinsatz kann auch über geeignete Leitungen oder Verbindungen mit einer externen Temperiereinheit, wie einem Thermostaten oder Kryostaten, verbunden sein. Auf diese Weise kann einerseits die häufig im Refraktometer vorhandene Temperiereinheit unterstützt werden, um die Zeitdauer für das Temperieren der Messzelle zu verkürzen, andererseits kann auch die Probenpräparation vereinfacht werden, indem eine zähflüssige oder feste Probe direkt in der Messzelle verflüssigt werden kann, was sowohl für die Messung als auch für eine nachfolgende Reinigung vorteilhaft ist.

Der Deckeleinsatz kann auch als Mittel zur Veränderung des Drucks in der Messzelle ausgestaltet sein, so dass beispielsweise mittels einer geeigneten Pumpe die Messzelle sowie eine darin angeordnete Probe über entsprechende Zugänge mit Druck beaufschlagt oder ein Vakuum in der Messzelle erzeugt werden kann. Mittels Vakuum können beispielsweise Luftblasen aus der Probe entfernt oder diese entgast werden. Durch eine Druckveränderung kann beispielsweise die Fliessfähigkeit der Probe beeinflusst werden, indem die Probe verfestigt oder verflüssigt wird.

Der Deckeleinsatz kann auch als Mittel zur Beaufschlagung der Messzelle mit einem Gas ausgestaltet sein. Das verwendete Gas kann entweder ein Schutzgas, wie beispielsweise Helium, Stickstoff oder Argon sein, oder ein gasförmiges Reagens sein, welches mit der Probe reagieren kann. Auf diese Weise kann eine Reaktion der Probe mit der Umgebung, wie eine Oxidation oder Reduktion, entweder verhindert oder aktiv ausgelöst werden kann. Die Beaufschlagung mit Gas kann über geeignete Zugänge im Deckeleinsatz erfolgen.

Die Deckeleinheit kann auch einen Sensor zur Erfassung einer physikalischen und/oder chemischen Eigenschaft der Probe aufweisen, beispielsweise eine optische Durchlichteinheit, mit der Einschlüsse erfasst oder auch Spektren aufgenommen werden können, oder auch analytische Sensoren, wie pH-Sensoren, Leitfähigkeitsensoren oder andere Sensoren. Auf diese Weise kann neben der Brechzahl eine weitere Eigenschaft der Probe mit dem Refraktometer bestimmt werden. Vorzugsweise ist der Sensor Teil des Deckeleinsatzes.

Die Grundplatte kann einen umlaufenden Rand aufweisen, welcher als Auslaufschutz dient, so dass keine Substanz auf das Messgerät selbst gelangen oder an dessen Aussenflächen herablaufen kann.

Zusätzlich kann dieser Rand mindestens einen Ablauf, beispielsweise als Aussparung oder Rinne im Rand aufweisen, so dass überschüssiges Probenmaterial von der Messzelle weggeleitet wird und an einer definierten Stelle ablaufen kann.

Die Grundplatte der Deckeleinheit kann ferner eine möglichst glatte oder auch beschichtete Oberfläche aufweisen, so dass sich Substanzreste nicht an dieser anlagern können.

Als Material für die Grundplatte der Deckeleinheit eignen sich insbesondere verschiedene Polymere, Metalle oder Metallverbindungen. Das Material sollte beständig gegenüber den verwendeten Substanzen und Reinigungsmitteln sein und zudem haltbar und kratzfest, damit sich beim Gebrauch keine Vertiefungen oder Rillen in der Grundplatte ausbilden. Geeignete Materialien umfassen unter anderem rostfreien Stahl, säurebeständigen Stahl, weitere Edelstähle sowie Polytetrafluoroethylen (PTFE) und andere chemisch beständige Kunststoffe oder Polymere.

In einer weiteren Ausgestaltung umfasst die Grundplatte zudem eine funktionelle Oberflächenbeschichtung, beispielsweise eine PTFE-Beschichtung, eine Edelmetall-Beschichtung oder eine Nano-Beschichtung. Die Beschichtung wird so gewählt, dass sie die angegeben Anforderungen an das Material unterstützt oder verbessert. Auf diese Weise kann die Grundplatte besonders reinigungsfreundlich ausgestaltet werden und zudem können Ablagerungen der Probe auf der Grundplatte minimiert oder sogar ganz verhindert werden.

Das Verbindungselement zur Verbindung der Grundplatte mit dem Gehäuse kann ein Teil einer magnetischen Verbindung, einer Schnappverbindung oder einer Bayonetverbindung sein, wobei selbstverständlich auch andere werkzeugfrei lösbare Verbindungen eingesetzt werden können. Eine magnetische Verbindung kann beispielsweise aus zwei sich anziehenden Magneten bestehen, ebenso wie aus einem Magneten und einem Stück eines magnetisierbaren Metalls, wie beispielsweise Eisen. Ein erstes Verbindungselement ist dabei mit dem Gehäuse und eine zweites mit der Grundplatte verbunden. Vorzugsweise ist die Stärke der Verbindung zwischen den beiden Verbindungselementen so ausgelegt, dass die Deckeleinheit von Hand vom Gehäuse entfernt werden kann, sich jedoch nicht einfach verschieben lässt.

Je nach Ausgestaltung der Deckeleinheit, insbesondere deren Grösse und Gewicht, kann die Grundplatte ein oder mehrere erste Verbindungselemente aufweisen, welche zusammenwirkend mit einer gleichen Anzahl zweiter Verbindungselemente am Gehäuse zur Befestigung der Deckeleinheit dienen. Weiterhin kann die Grundplatte und/oder die Oberfläche des Messgeräts eine flächiges Verbindungselement aufweisen oder als solches ausgestaltet sein, welches mit einem oder mehreren Gegenstücken auf dem Messgerät oder der Grundplatte zusammenwirkt.

Selbstverständlich ist es auch möglich, eine Deckeleinheit zu verwenden, die Deckeleinsätze mit zwei oder mehr der vorgehend beschriebenen Mittel oder Ausgestaltungen aufweist.

Verschiedene Ausgestaltungen einer erfindungsgemässen Deckeleinheit eines Refraktometers werden im Folgenden anhand der Figuren beschrieben. Die Figuren zeigen:
- Fig. 1: eine dreidimensionale Teilansicht eines Refraktometers mit einer geschlossenen Deckeleinheit;
- Fig. 2: eine dreidimensionale Teilansicht eines Refraktometers und einer Deckeleinheit, welche voneinander getrennt sind;
- Fig. 3: einen Schnitt durch ein Refraktometer mit einer Deckeleinheit, welche einen Dichteinsatz aufweist, als Teildarstellung;
- Fig. 4: einen Schnitt durch ein Refraktometer mit einer Deckeleinheit, welche eine optische Abdeckung aufweist, als Teildarstellung;
- Fig. 5: einen Schnitt durch ein Refraktometer mit einer Deckeleinheit, welche einen Presseinsatz aufweist, als Teildarstellung;
- Fig. 6: einen Schnitt durch ein Refraktometer mit einer Deckeleinheit, welche ein Temperiermittel aufweist, als Teildarstellung;
- Fig. 7: einen Schnitt durch ein Refraktometer mit einer Deckeleinheit, welche Mittel zur Veränderung des Drucks in der Messzelle aufweist, als Teildarstellung;
- Fig. 8: einen Schnitt durch ein Refraktometer mit einer Deckeleinheit, welche eine optischen Sensoreinheit aufweist, als Teildarstellung;
- Fig. 9: einen Schnitt durch ein Refraktometer mit einer Deckeleinheit, welche einen analytischen Sensor aufweist, als Teildarstellung;

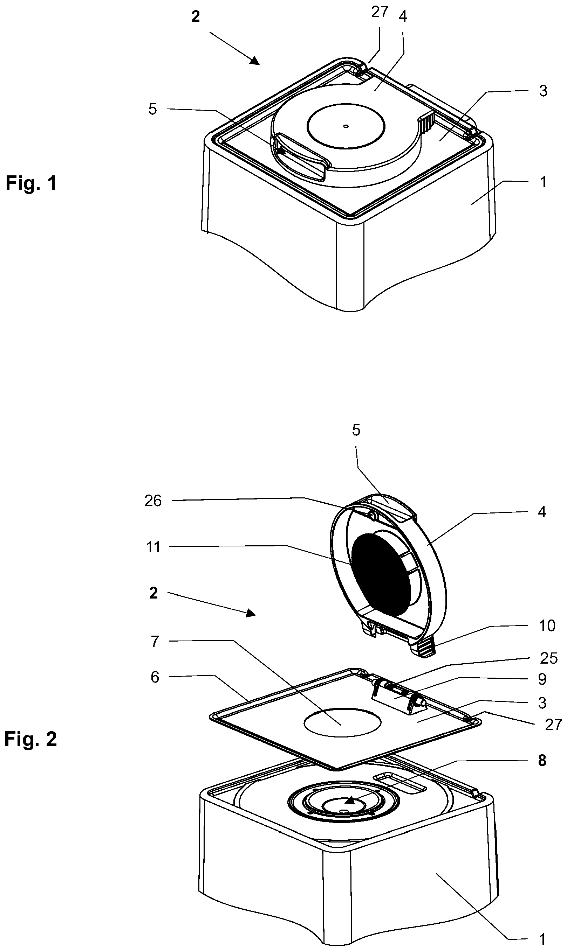

Figur 1 zeigt eine dreidimensionale Darstellung eines Refraktometers, im folgenden auch als Messgerät bezeichnet, mit einem Gehäuse 1, einer Deckeleinheit 2, welche eine Grundplatte 3 und einen in dieser Darstellung geschlossenen Deckel 4 aufweist. Der Deckel 4 weist einen Griff 5 zum Öffnen und Schliessen des Deckels 4 auf.

In Figur 2 sind die Deckeleinheit 2 und das Messgerät voneinander getrennt und in einer Explosionsdarstellung gezeigt. Die Grundplatte 3 weist einen umlaufenden Rand 6 und eine Aussparung 7 auf, so dass eine im Messgerät, genauer im Gehäuse 1 des Messgeräts, angeordnete Messzelle 8 bei aufgesetzter Deckeleinheit 2 und geöffnetem Deckel 4 mit einer Probe beschickt werden kann. Im Rand 6 sind zwei Abläufe 27 ausgebildet, so dass überschüssiges Probenmaterial gerichtet von der Grundplatte 3 ablaufen kann. Das Refraktometer weist eine trichterförmige Messzelle 8 auf. Im Messgerät unterhalb der Messzelle 8 befindet sich eine optische Messeinheit, mit welcher die Brechzahl einer in der Messzelle 8 befindlichen Probe bestimmt werden kann. Der Boden der Messzelle 8 ist als optisches Fenster ausgestaltet, an welches die optische Messeinheit angrenzt. Alternativ könnte auch mindestens ein optisches Fenster in der Wand der Messzelle 8 angeordnet sein.

Weiterhin ist an der Grundplatte 3 ein erstes Scharnierteil 9 befestigt, welches mit einem am Deckel 4 angeordneten zweiten Scharnierteil 10 ein bewegliches Scharnier bildet. Die Scharnierteile 9, 10 sind so ausgebildet, dass diese leicht von Hand miteinander verbunden oder von einander getrennt werden können.

Besonders benutzerfreundlich ist die Kombination einer im Scharnier angeordneten Drehfeder 25 und eines im Griff 5 angeordneten und gegen die Grundplatte gerichteten Magneten 26, so dass der Deckel 4 in der geöffneten Position nicht auf Grund seines Eigengewichts zufallen kann. Der Magnet 26 sorgt zudem dafür, dass der Deckel im geschlossenen Zustand geschlossen bleibt. Die Federkraft der Drehfeder 25 und die Magnetkraft des Magneten 26 sind aufeinander abgestimmt, so dass der Deckel 4 ohne zusätzlichen Kraftimpuls in der gewählten Stellung - auf oder zu - verbleibt.

Auf der der Messzelle 8 zugewandten Seite des Deckels 4 ist eine optische Abdeckung 11 zu erkennen, welche eine dunkle Oberfläche aufweist. Bei geschlossenem Deckel 4 liegt diese Abdeckung 11 über der Aussparung 7 und deckt so die Messzelle 8 gegen möglicherweise von aussen eindringendes Fremdlicht ab, selbst wenn der Deckel 4 nicht vollständig plan auf der Grundplatte 3 aufliegt.

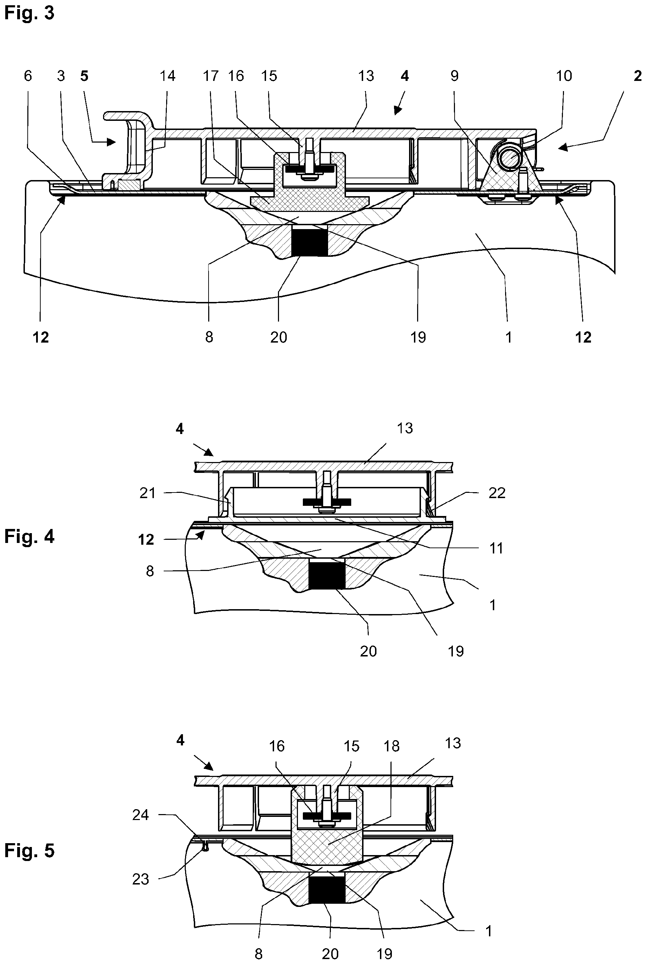

Die Figuren 3 bis 9 zeigen mehrere Ausgestaltungen einer geschlossenen Deckeleinheit 2 mit unterschiedlichen Deckeleinsätzen im Schnitt, wobei jeweils nur Ausschnitte des Messgeräts und der Deckeleinheit 2 gezeigt sind.

Wenn die Deckeleinheit 2 mit dem Messgerät verbunden ist, liegt die Grundplatte 3 auf der Oberfläche des Messgeräts auf. Der die Grundplatte 3 umlaufende Rand 6 ist leicht nach oben gebogen, so dass die Grundplatte 3 eine Auffangschale für möglicherweise aus der Messzelle austretende oder bei einem fehlerhaften Beschicken austretende Substanz bildet. Die Grundplatte 3 enthält hier ein magnetisches Material, so dass sie durch platten- oder scheibenförmige Magnete 12, welche auf oder nahe der Oberfläche des Gehäuses 1 angeordnet sind, angezogen wird und so die Deckeleinheit 2 auf dem Gehäuse 1 des Referaktometers fixiert. Der Deckel 4 ist im Wesentlich hohl und weist neben dem Griff 5 und dem zweiten Scharnierteil 10 eine Abschluss- oder Deckplatte13 auf, welche von einem umlaufenden Rand 14 umgeben ist.

Im Inneren des Deckels 4 befindet sich eine erste Aufhängung 15, welche in den Deckel 4 hineinragt und an ihrem freien Ende ein erstes Verbindungselement 16 aufweist, welches hier scheibenartig ausgestaltet ist. An diesem ersten Verbindungselement 16 kann, wie in den Figuren 3 bis 9 gezeigt, ein Deckeleinsatz 17, 18, 28, 31, 35, 39 werkzeugfrei befestigt werden.

Dazu ist das Verbindungselement 16 als elastische Kunststoffscheibe ausgestaltet, über die die verschiedenen Deckeleinsätze 18, 28, 31, 35, 39 gestülpt werden können. Die Verbindung zwischen Deckeleinsatz 17, 18, 28, 31, 35, 39 und dem Verbindungselement 16 verfügt über ein gewisses Spiel, so dass die Eindringtiefe des Deckeleinsatzes 17, 18, 28, 31, 35, 39 in die Messzelle 8 einerseits über das Eigengewicht des Deckeleinsatzes 17, 18, 28, 31, 35, 39 und andererseits über die Probe, z. B. deren Viskosität oder Volumen, beeinflusst wird und so eine Beschädigung der Messzelle 8 durch den Deckeleinsatz 17, 18, 28, 31, 35, 39 vermieden werden kann.

Die Aussparung (s. a. Figur 2) in der Grundplatte 3 bildet einen Zugang zur Messzelle 8, welche hier trichterförmig ausgebildet ist. Am Boden der Messzelle 8 befindet sich ein Fenster 19, welches die Messzelle 8 von der darunter angeordneten optischen Messeinheit 20 trennt.

Der Dichteinsatz 17 ist pilzartig ausgebildet und ragt bei geschlossenem Deckel 4, wie in Figur 3 gezeigt, in die Messzelle 8 hinein und dichtet diese nach aussen ab, indem der Kopf des Dichteinsatzes 17 aufgrund seines Eigengewichts an den Seitenwänden der Messzelle 8 anliegt. Der Dichteinsatz 17 schirmt die Messzelle zudem auch gegen Fremdlicht ab.

In Figur 4 ist die Deckeleinheit 2 mit der optischen Abdeckung 11 als Deckeleinsatz zu sehen. Die optische Abdeckung 11 ist im Wesentlichen eine flache Scheibe mit einer dunklen Oberfläche (s. Figur 2), welche bei geschlossenem Deckel 4 die Messzelle 8 gegen Fremdlicht abschirmt. Diese flache Scheibe weist auf der von der dunklen Oberfläche abgewandten Seite mindestens zwei Haken 21 auf, welche in entsprechend ausgebildete zweite Verbindungselemente 22 am Deckel 4 eingreifen können, so dass die optische Abdeckung 11 mittels einer lösbaren Schnappverbindung am Deckel 4 befestigt werden kann. Die Schnappverbindung ist so gestaltet, dass die optische Abdeckung 11 werkzeugfrei in den Deckel 4 eingesetzt werden kann.

Figur 5 zeigt als weitere Ausgestaltung des Deckeleinsatzes einen Presseinsatz 18, welcher über das erste Verbindungselement 16 am Deckel 4 befestigt werden kann. Der Presseinsatz 18 ist derart ausgebildet, dass er bei geschlossenem Deckel 4 in die Messzelle 8 hineinragt und eine Probe gegen das Fenster 19 drückt. Der Presseinsatz 18 ist so dimensioniert, dass bei geschlossenem Deckel 4 sein eines Ende gegen den Deckel 4 und das andere Ende gegen die Seitenwände der Messzelle 8 gepresst wird, um Druck auf eine Probe in der Messzelle 8 auszuüben.

Die Deckeleinsätze 11, 17, 18, 28, 31, 35, 39 sind mit etwas Spiel am Deckel befestigt, so dass diese beim Schliessen des Deckels 4 auf oder in die Messzelle 8 gedrückt werden und so die Messzelle 8, genauer die darin befindliche Probe, verschliessen.

Beispielhaft ist in Figur 5 zudem eine Schnappverbindung zwischen der Grundplatte 3 und dem Gehäuse 1 des Messgeräts gezeigt. Diese kann entweder durch mindestens eine Vertiefung 23 in der Oberfläche des Gehäuses 1 und mindestens eine dazu passende Ausbuchtung 24 in der Grundplatte 3, oder auch durch Erhebungen auf dem Gehäuse 1 und entsprechende Eingreifmittel auf der Grundplatte 3 realisiert werden.

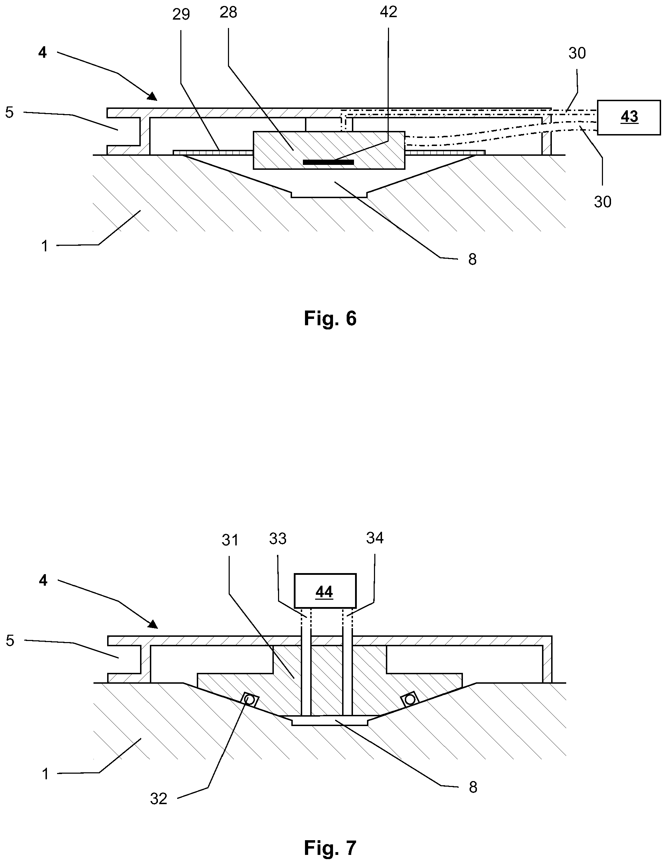

Weitere Deckeleinsätze sind ohne die Verbindungselemente 16 stark vereinfacht in den Figuren 6 bis 9 im Schnitt gezeigt.

Figur 6 zeigt einen Deckel 4 mit einem Deckeleinsatz 28 welcher ein internes oder externes Temperiermittel 42, 43 aufweist. Zusätzlich weist der Deckeleinsatz 28 eine Abdeckung 29 auf, welche die Messzelle 8 optisch abschirmt. In Figur 6 ist sowohl ein externes Temperiermittel 43 als auch ein internes Temperiermittel 42 angedeutet, wobei die Deckeleinheit auch nur eines der beiden aufweisen kann.

Als internes Temperiermittel 42 bieten sich Widerstandsheizungen sowie Peltierelemente an. Peltierelemente können sowohl zum Kühlen als auch zum Heizen verwendet werden. Der Deckeleinsatz 28 kann auch mit einem externen Temperiermittel 43 verbunden sein, wie einem Thermostaten oder Kryostaten, wie es durch die Leitungen 30 angedeutet ist, die mögliche Varianten zur Führung der Leitungen darstellen. Je nach Ausgestaltung des Temperiermittels 42, 43 kann es sich bei den Leitungen 30 auch um elektrische Leitungen handeln, welche zum Beispiel das interne Temperiermittel 42 mit Energie versorgen.

Figur 7 zeigt einen weiteren Deckeleinsatz 31, welcher über mindestens ein Dichtelement 32 gegen die Messzelle 8 abgedichtet werden kann. Zudem verfügt der Deckeleinsatz 31 über eine Zuleitung 33 und eine Ableitung 34 über die die Messzelle 8 mit einem Gas beaufschlagt oder unter Vakuum gesetzt werden kann, wie es durch die eine Pumpe und/oder ein Gasreservoir enthaltende Einheit 44 angedeutet ist.

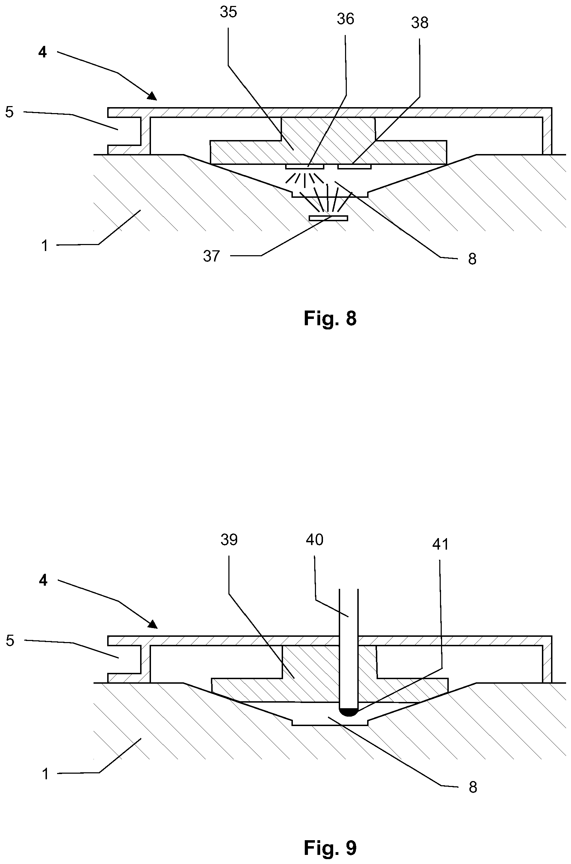

Ein Deckeleinsatz 35 gemäss Figur 8 schirmt die Messzelle 8 gegen Fremdlicht ab und weist zudem mindestens eine Lichtquelle 36, 37 sowie einen Sensor 38 auf. Die Probe kann mit dieser Anordnung im Durchlicht oder Auflicht auf ihre Homogenität überprüft werden, es können weitere optische Messungen an der Probe durchgeführt werden, wie beispielsweise die Aufnahme von Spektren. Weiterhin ist es auch möglich ein Durch- oder Auflichtbild der Probe zu erfassen und dieses auf Luftblasen, Schwebteilchen oder Einschlüsse zu überprüfen. Diese Überprüfung kann durch den Benutzer visuell anhand von aufgenommenen Bildern und/oder Spektren oder auch durch die Gerätesoftware mittels einer geeigneten Auswertungsroutine erfolgen.

Figur 9 zeigt einen Deckeleinsatz 39 mit einem Sensor 40, der so angeordnet ist, dass sein sensitives Element 41 mit einer Probe in der Messzelle 8 in Kontakt treten kann. Geeignete Sensoren sind alle Arten von analytischen Sensoren, wie elektrochemische oder elektrophysikalische Sensoren. Zu diesen zählen beispielsweise ionensensitive, amperometrische oder potentiometrische Sensoren, wie pH-, Sauerstoff-, oder Leitfähigkeits-Sensoren.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

**Bezugszeichenliste**

| | | | |
|---|---|---|---|
| 1 | Gehäuse | 23 | Vertiefung |
| 2 | Deckeleinheit | 24 | Ausbuchtung |
| 3 | Grundplatte | 25 | Feder |
| 4 | Deckel | 26 | Magnet |
| 5 | Griff | 27 | Ablauf |
| 6 | Rand | 28 | Deckeleinsatz |
| 7 | Aussparung | 29 | Abdeckung |
| 8 | Messzelle | 30 | Leitung |
| 9 | erstes Scharnierteil | 31 | Deckeleinsatz |
| 10 | zweites Scharnierteil | 32 | Dichtelement |
| 11 | Deckeleinsatz / Abdeckung | 33 | Zuleitung |
| 12 | Magnete | 34 | Ableitung |
| 13 | Abschlussplatte | 35 | Deckeleinsatz |
| 14 | Rand | 36 | Lichtquelle |
| 15 | erste Aufhängung | 37 | Lichtquelle |
| 16 | erstes Verbindungselement | 38 | Sensor |
| 17 | Dichteinsatz / Deckeleinsatz | 39 | Deckeleinsatz |
| 18 | Presseinsatz / Deckeleinsatz | 40 | Sensor |
| 19 | Fenster | 41 | Sensitives Element |
| 20 | Messeinheit | 42 | Temperiermittel |
| 21 | Haken | 43 | Temperiermittel |
| 22 | zweites Verbindungselement | 44 | Pumpe / Gasreservoir |

## Patentansprüche

1. Refraktometer mit einem Gehäuse (1), einer im Gehäuse (1) angeordneten Messzelle (8) und einer Deckeleinheit (2), welche eine Grundplatte (3) mit einer Aussparung (7), die einen Zugang zur Messzelle des Refraktometers bildet, und einen Deckel (4) zum Abdecken der Messzelle aufweist, wobei der Deckel (4) über ein Scharnier mit der Grundplatte (3) verbunden ist, **dadurch gekennzeichnet, dass** die Deckeleinheit (2) ferner einen Deckeleinsatz (11, 17, 18, 28, 31, 35, 39) aufweist, welcher Deckeleinsatz (11, 17, 18, 28, 31, 35, 39) auswechselbar im Deckel (4) angeordnet ist, und dass die Deckeleinheit (2) über ein mit der Grundplatte (3) verbundenes Verbindungselement lösbar mit dem Gehäuse (1) verbunden ist.

2. Refraktometer nach Anspruch 1, **dadurch gekennzeichnet, dass** das Scharnier zwei miteinander koppelbare Teile (9, 10) aufweist, so dass der Deckel (4) von der Grundplatte (3) trennbar ist.

3. Refraktometer nach Anspruch 1 bis 2, **dadurch gekennzeichnet, dass** der Deckeleinsatz eine optische Abschirmung (11) gegen das Eindringen von Fremdlicht in die Messzelle (8) aufweist.

4. Refraktometer nach einem der Ansprüche 1 bis 3, **dadurch gekennzeichnet, dass** der Deckeleinsatz einen Presseinsatz (18) zum Verteilen einer Probe in der Messzelle (8) aufweist.

5. Refraktometer nach einem der Ansprüche 1 bis 3, **dadurch gekennzeichnet, dass** der Deckeleinsatz einen Dichteinsatz (17) zum Abdichten der Messzelle (8) gegenüber der Umgebung aufweist.

6. Refraktometer nach einem der Ansprüche 1 bis 5, **dadurch gekennzeichnet, dass** der Deckeleinsatz (28) ein Temperiermittel (42, 43) aufweist.

7. Refraktometer nach einem der Ansprüche 1 bis 6, **dadurch gekennzeichnet, dass** der Deckeleinsatz (18, 31) ein Mittel zur Veränderung des Drucks in der Messzelle (8) aufweist.

8. Refraktometer nach einem der Ansprüche 1 bis 7, **dadurch gekennzeichnet, dass** der Deckeleinsatz (31) ein Mittel zur Beaufschlagung der Messzelle (8) mit einem Gas aufweist.

9. Refraktometer nach einem der Ansprüche 1 bis 7, **dadurch gekennzeichnet, dass** dieses mindestens einen Sensor (38, 40) zur Erfassung einer physikalischen und/oder chemischen Eigenschaft der Probe aufweist.

10. Refraktometer nach einem der Ansprüche 1 bis 9, **dadurch gekennzeichnet, dass** die Grundplatte (3) einen umlaufenden Rand (6) aufweist.

11. Refraktometer nach Anspruch 10, **dadurch gekennzeichnet, dass** der umlaufenden Rand (6) mindestens einen Ablauf (27) aufweist.

12. Refraktometer nach einem der Ansprüche 1 bis 11, **dadurch gekennzeichnet, dass** die Grundplatte (3) aus einem chemisch beständigen Material besteht und/oder eine Oberflächenbeschichtung aufweist.

13. Refraktometer nach einem der Ansprüche 1 bis 12, **dadurch gekennzeichnet, dass** das Verbindungselement eine magnetische Verbindung, eine Schnappverbindung oder einen Bayonetverschluss aufweist.

## Claims

1. Refractometer comprising a housing (1), a measurement cell (8) arranged in the housing (1), and a lid unit (2), which lid unit (2) comprises a base plate (3) having a cutout (7) allowing access to the measurement cell of the refractometer, and a lid (4) for covering the measurement cell, wherein the lid (4) is connected to the base plate (3) via a hinge, **characterized in that** the lid unit (2) further comprises a lid insert (11, 17, 18, 28, 31, 35, 39), which lid insert (11, 17, 18, 28, 31, 35, 39) is arranged replaceably in the lid (4), and that the lid unit (2) is detachably connected to the housing (1) via a connecting element that is connected to the base plate (3).

2. Refractometer according to claim 1, **characterized in that** the hinge comprises two parts (9, 10) that can be coupled to one another so that the lid (4) is separable from the base plate (3).

3. Refractometer according to claim 1 or 2, **characterized in that** the lid insert comprises an optical shield (11) to prevent external light from penetrating the measurement cell (8).

4. Refractometer according to any of claims 1 to 3, **characterized in that** the lid insert comprises a pressing insert (18) for spreading the sample in the measurement cell (8).

5. Refractometer according to any of claims 1 to 3, **characterized in that** the lid insert comprises a sealing insert (17) for insulating the measurement cell (8) from the outside environment.

6. Refractometer according to any of claims 1 to 5, **characterized in that** the lid insert (28) comprises a temperature controlling means (42, 43).

7. Refractometer according to any of claims 1 to 6, **characterized in that** the lid insert (18, 31) comprises a means for changing the pressure in the measurement cell (8).

8. Refractometer according to any of claims 1 to 7, **characterized in that** the lid insert (31) comprises a means for charging the measurement cell (8) with a gas.

9. Refractometer according to any of claims 1 to 7, **characterized in that** it comprises at least one sensor (38, 40) for recording a physical and/or chemical property of the sample.

10. Refractometer according to any of claims 1 to 9, **characterized in that** the base plate (3) comprises a lip (6) extending peripherally.

11. Refractometer according to claim 10, **characterized in that** the peripheral lip (6) comprises at least one drain channel (27).

12. Refractometer according to any of claims 1 to 11, **characterized in that** the base plate (3) is made from a chemically resistant material and/or has a surface coating.

13. Refractometer according to any of claims 1 to 12, **characterized in that** the connecting element comprises a magnetic connection, a snap-on connection or a bayonet fastening.

## Revendications

1. Réfractomètre comprenant un boîtier (1), une cellule de mesure (8) disposée dans le boîtier (1) et une unité formant couvercle (2), qui présente une plaque de base (3) pourvue d'un évidement (7), qui forme un accès à la cellule de mesure du réfractomètre, et un couvercle (4) servant à recouvrir la cellule de mesure, dans lequel le couvercle (4) est relié à la plaque de base (3) par l'intermédiaire d'une charnière, **caractérisé en ce que** l'unité formant couvercle (2) présente en outre un insert de couvercle (11, 17, 18, 28, 31, 35, 39), lequel insert de couvercle (11, 17, 18, 28, 31, 35, 39) est disposé de manière interchangeable dans le couvercle (4), et que l'unité formant couvercle (2) est reliée de manière amovible au boîtier (1) par l'intermédiaire d'un élément de liaison relié à la plaque de base (3).

2. Réfractomètre selon la revendication 1, **caractérisé en ce que** la charnière présente deux parties (9, 10) pouvant être couplées l'une à l'autre de sorte que le couvercle (4) peut être séparé de la plaque de base (3).

3. Réfractomètre selon les revendications 1 à 2, **caractérisé en ce que** l'insert de couvercle présente un blindage optique (11) empêchant toute lumière extérieure de pénétrer dans la cellule de mesure (8).

4. Réfractomètre selon l'une quelconque des revendications 1 à 3, **caractérisé en ce que** l'insert de couvercle présente un insert de presse (18) servant à répartir un échantillon dans la cellule de mesure (8).

5. Réfractomètre selon l'une quelconque des revendications 1 à 3, **caractérisé en ce que** l'insert de couvercle présente un insert étanche (17) servant à étanchéifier la cellule de mesure (8) par rapport à l'environnement extérieur.

6. Réfractomètre selon l'une quelconque des revendications 1 à 5, **caractérisé en ce que** l'insert de couvercle (28) présente un moyen de régulation de la température (42, 43).

7. Réfractomètre selon l'une quelconque des revendications 1 à 6, **caractérisé en ce que** l'insert de couvercle (18, 31) présente un moyen servant à modifier la pression dans la cellule de mesure (8).

8. Réfractomètre selon l'une quelconque des revendications 1 à 7, **caractérisé en ce que** l'insert de couvercle (31) présente un moyen servant à soumettre la cellule de mesure (8) à l'action d'un gaz.

9. Réfractomètre selon l'une quelconque des revendications 1 à 7, **caractérisé en ce que** celui-ci présente au moins un capteur (38, 40) servant à détecter une propriété physique et/ou chimique de l'échantillon.

10. Réfractomètre selon l'une quelconque des revendications 1 à 9, **caractérisé en ce que** la plaque de base (3) présente un bord périphérique (6).

11. Réfractomètre selon la revendication 10, **caractérisé en ce que** le bord périphérique (6) présente au moins une évacuation (27).

12. Réfractomètre selon l'une quelconque des revendications 1 à 11, **caractérisé en ce que** la plaque de base (3) est constituée d'un matériau chimiquement résistant et/ou présente un revêtement de surface.

13. Réfractomètre selon l'une quelconque des revendications 1 à 12, **caractérisé en ce que** l'élément de liaison présente une liaison magnétique, une liaison à déclic ou une fermeture à baïonnette.
